# EUROPEAN PATENT SPECIFICATION

(11) **EP 1 852 622 B1**
(45) Date of publication and mention of the grant of the patent: **06.04.2011**
(21) Application number: 06713491.6
(22) Date of filing: 10.02.2006
(51) Int. Cl.: F16D 25/0638, F16D 13/52, F16F 1/32

(54) **CONED DISC SPRING**
TELLERFEDER
RESSORT A DISQUE CONIQUE

(30) Priority: 10.02.2005 JP 2005035247
(43) Date of publication of application: 07.11.2007
(73) Proprietor: Toyota Jidosha Kabushiki Kaisha, Toyota-shi, Aichi-ken 471-8571 (JP); AISIN AW CO., LTD., Anjo, Aichi 444-1164 (JP); NHK SPRING CO., LTD., Yokohama-shi, Kanagawa 236-0004 (JP)
(72) Inventor: OGAWA, Yukitoshi c/o TOYOTA JIDOSHA KABUSHIKI KAISHA, Aichi-ken 471-8571 (JP); ISHIKAWA, Takayuki c/o TOYOTA JIDOSHA KABUSHIKI KAISHA, Aichi-ken 471-8571 (JP); KITA, Akihiko c/o AISIN AW CO., LTD., Aichi 444-1164 (JP); TSUZUKI, Shigeo c/o AISIN AW CO., LTD., Aichi 444-1164 (JP); NOZAKI, Hiroyuki c/o AISIN AW CO., LTD., Aichi 444-1164 (JP); IMAIZUMI, Hironobu c/o NHK SPRING CO., LTD., Aikawa-machi, Aikoh-gun, 2430303 Kanagawa, (JP)
(74) Representative: Eisenführ, Speiser & Partner
(86) International application number: PCT/JP2006/302348
(87) International publication number: WO 2006/085610

(56) References cited:
- EP-A- 1 452 760
- DE-A1- 10 239 400
- DE-A1- 10 249 979
- DE-A1-102004 010 780
- FR-A- 2 568 337
- JP-A- 01 303 321
- JP-A- 09 329 155
- JP-A- 2000 274 470
- JP-A- 2001 295 860

## Description

### Technical Fields

The present invention relates to coned disc springs that are used to absorb shocks occurring during the engaging of a clutch of a multiplate clutch structure of a transporting machine. Specifically, the present invention relates to improvement in a coned disc spring comprising teeth for inhibiting relative rotation with respect to a clutch drum.

### Background Art

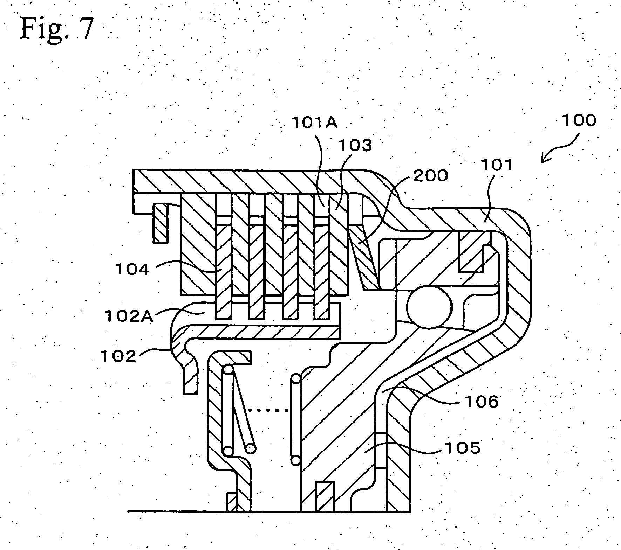

A wet-type multiplate clutch structure is used as a clutch structure in a transmission of a transporting machine. The wet-type multiplate clutch structure comprises a coned disc spring used for absorbing shocks occurring during the engaging of a clutch. Fig. 7 is an enlarged sectional side view showing a composition of a multiplate clutch structure 100 provided with a conventional coned disc spring 200. The multiplate clutch structure 100 comprises a cylindrical clutch drum 101 having a bottom. Plural spline grooves 101A, extending in the axial direction, are formed along the circumferential direction on the inner peripheral surface of the clutch drum 101.

In the clutch drum 101, a tubular clutch hub 102 is provided thereat and has a common rotation axis with respect to the clutch drum 101. Plural spline grooves 102A, extending in the axial direction, are formed along the circumferential direction on the outer periphery of the clutch hub 102.

Driven plates 103 and driving plates 104 are alternately arranged with predetermined spaces between the clutch drum 101 and the clutch hub 102. The driven plate 103 is closely fitted to the spline groove 101A of the clutch drum 101, and the driving plate 104 is closely fitted to the spline groove 101A of the clutch hub 102, and they can move in the axial direction. A piston 105, which is movable in the axial direction, is provided at the bottom side of the clutch drum 101. An oil pressure space 106 is provided between the piston 105 and the clutch drum 101.

A coned disc spring 200 having a hole in the center and a circular dish shape is provided between the driven plate 103, which is on the bottom side of the clutch drum 101, and the piston 105. The coned disc spring 200 is supported by the driven plate 103 at the surface of the outer periphery, and by the piston 105 at the back of the inner periphery.

In the above multiplate clutch structure 100, when operating oil is supplied to the oil pressure space 106, the piston 105 driven by oil pressure presses the driven plate 103, which is on the bottom side of the clutch drum 101, through the coned disc spring 200. Then, the driven plate 103 on the bottom side of the clutch drum 101 moves to the opening of the clutch drum 101, and friction surfaces of the driven plate 103 and the driving plate 104, which are placed oppositely to each other, engage, whereby they are clutched. In this case, the coned disc spring 200 elastically deforms from the dish shape to become flattened, thereby absorbing shocks that occur during the engaging of the clutch.

The above coned disc spring 200 has a circular shape, whereby it tends to relatively rotate with respect to the clutch drum 101 during rotation of the clutch structure 100. Therefore, the coned disc spring 200 frequently hits the inside wall of the clutch drum 101, which may cause a problem of wear on the inside of the wall of the clutch drum 101

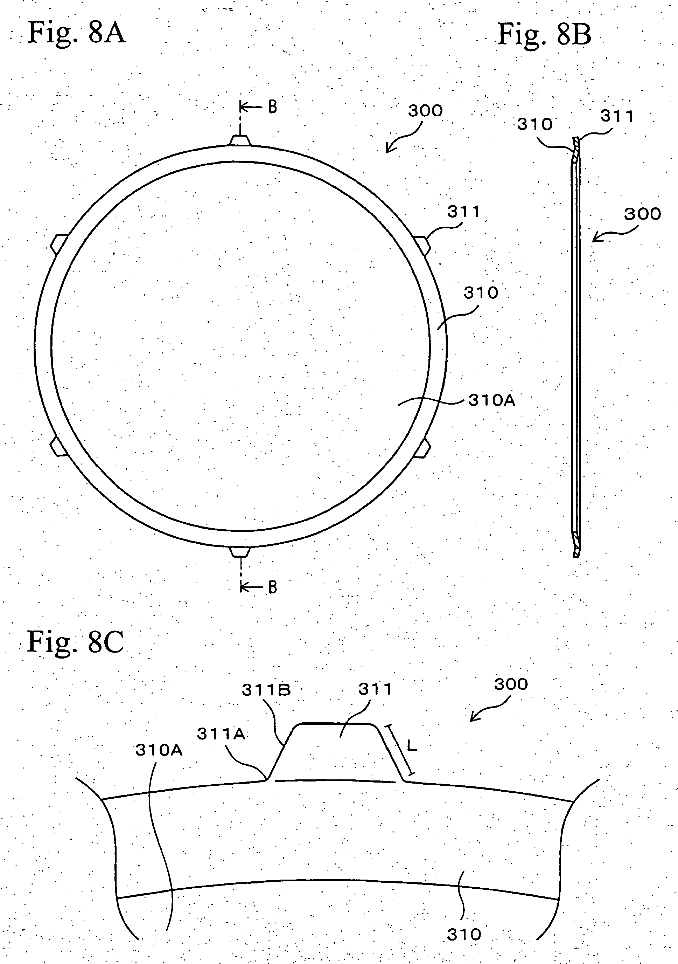

In order to solve the above problem, a coned disc spring 300 has been proposed (for example, see Japanese Unexamined Patent Applications Publications Nos. 2001-295860 and H9-329155). As shown in Fig. 8A to 8C, the coned disc spring 300 comprises a body 310 having a hole 310A in the center and having a circular dish shape, and plural teeth 311 are formed on the outer periphery of the body 310. The body 310 of the coned disc spring 300 is arranged at the inside of the clutch drum 101, so that the teeth 311 are closely fitted to the spline grooves 101A on the inner peripheral surface of the clutch drum 101, whereby the coned disc spring 300 does not relatively rotate as described above.

When the above coned disc spring 300 is elastically deformed during the engaging of a clutch, a concentration of stress occurs at the base of the teeth 311. Therefore, there has been a problem in that the durability of the coned disc spring 300 is greatly decreased.

In order to reduce the stress that may occur at the base of the teeth 311, a radius of curvature R of a circular arc portion 311A at the base of the teeth 311 may be enlarged. In this case, the circular arc portion 311A at the base of the teeth 311 extends in the circumferential direction and projects to the radial outer side. Therefore, if a corner portion of the spline groove 101A of the clutch drum 101 is sharp, the base of the tooth 311 heavily interferes with the spline groove 101A during rotation of the clutch drum 101. Accordingly, wear of the spline groove 101A caused by the tooth 311 increases. Moreover, a length L of a straight portion 311B on the side of the teeth 311 is shortened, and the area in which the tooth 311 and the spline groove 101A are closely fitted is decreased. Therefore, a contact pressure due to the tooth 311 at the spline groove 101A is increased, and the wear of the spline groove 101A caused by the tooth 311 is increased. Specifically, in order to ensure that the display of the correct mileage of an automobile, which has been increasing recently, the coned disc spring 300 is required to be highly durable. Accordingly, the above problems need to be solved.

EP-A- 1 452 760 discloses in conformity with the preamble of claim 1 a coned disc spring comprising a body having a circular dish shape provided with plural teeth and a stress relaxation portion. The teeth are formed by loaded sections extending radially from an inner periphery to an outer periphery of the body. The outer regions of the loaded sections are supported on the inner surface of a housing for example by means of a ring of wire. The loaded sections of the body are connected by means of coupling segments having a smaller thickness than the remaining spring material to form stress relaxation portions acting in an axial direction.

FR-A- 2 568 337 discloses a coned disc spring which is formed by radially extended loops and therebetween arranged lever-shaped sections having strengthening corrugations. Each lever-shaped section is connected to an inner sling between two loops. The outer end portions of the lever-shaped sections are axially fixed between two abutments on the inner surface of a housing.

DE 10 2004 010 780 A1 discloses a coned disc spring which consists of lever segments which are supported on a circular tilting bearing and extending from an inner periphery to an other periphery of the spring.

DE 102 39 400 A1 discloses a pressure plate for utilization in a clutch having extensions on its periphery for connection with tangential leaf springs.

### DISCLOSURE OF THE INVENTION

An object of the present invention is to provide a coned disc spring according to claim 1 by which a stress occurring at a base of a tooth during the engaging of a clutch is decreased, and by which wear of a spline groove caused by the tooth is decreased.

The present invention provides a coned disc spring arranged between a second and a third component provided inside a tubular first component and which is movable in an axial direction. The coned disc spring comprises a body having a circular dish shape, teeth, and a stress relaxation portion. The tooth closely fits into a spline groove formed on an inner peripheral surface of the first component, and it projects to a radial outer side on an outer periphery of the body. The stress relaxation portion is formed by notching a base of the tooth in approximately circular arc shape in a a circumferential direction and a radial direction of the body.

The coned disc spring of the present invention comprises a stress relaxation portion formed by notching the base of a tooth in approximately a circular arc shape in a circumferential direction and a radial direction. Therefore, the base of the tooth may have a large radius of curvature R without projecting to the radial outer side. Accordingly, when the above coned disc spring is arranged between a driven plate and a piston in a clutch structure of a transporting machine, the stress relaxation portion can reduce stress occurring at the base of the tooth during the engaging of the clutch. Moreover, even if a corner portion of a spline groove of a clutch drum is sharp, the base of the tooth does not interfere with the spline groove during rotation of the clutch drum, whereby wear of the spline groove caused by tooth can be reduced. Therefore, the coned disc spring may be highly durable, thereby ensuring proper display of recently increasing automobile mileage.

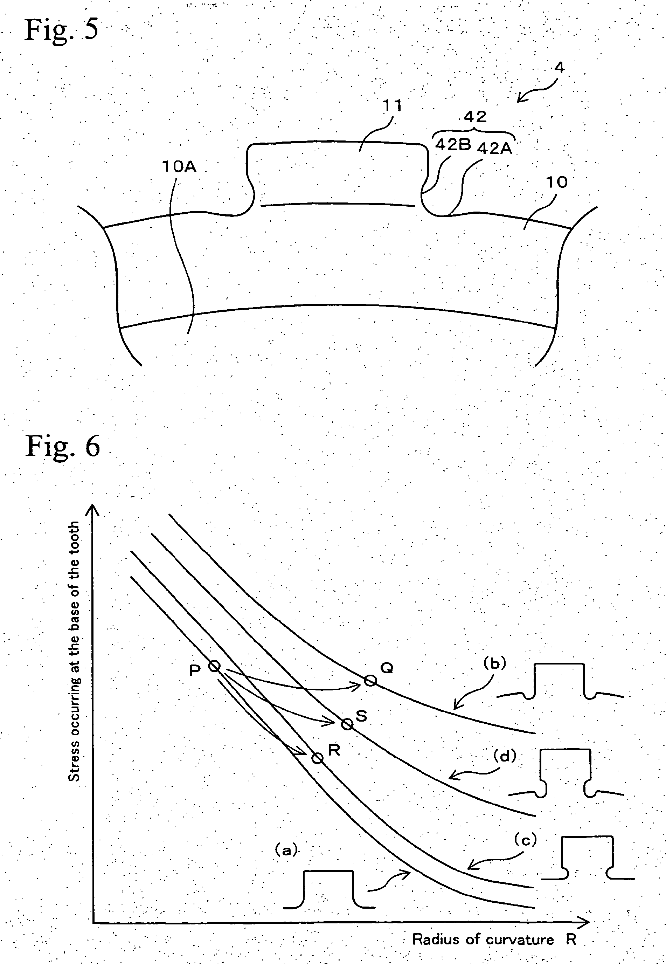

Various shapes of coned disc springs are explained with reference to Fig. 6. Fig. 6 is a view explaining a relationship between the radius of curvature R of the base of a tooth and a stress occurring thereat relating to various shapes of the coned disc spring of the present invention. In Fig. 6, a curve (a) indicates characteristics of a conventional coned disc spring (hereinafter referred to as coned disc spring "a"), a curve (b) indicates characteristics of a coned disc spring (hereinafter referred to as coned disc spring "b") comprising a stress relaxation portion formed by notching the base of a tooth in a circular arc shape in the radial direction, a curve (c) indicates characteristics of a coned disc spring (hereinafter referred to as coned disc spring "c") comprising a stress relaxation portion formed by notching the base of a tooth in a circular arc shape along the circumferential direction, and a curve (d) indicates characteristics of a coned disc spring (hereinafter referred to as coned disc spring "d") of the present invention comprising a stress relaxation portion formed by notching the base of a tooth in a circular arc shape in the radial direction and along the circumferential direction.

When the radius of curvature R of the base of a tooth of the conventional coned disc spring "a" is enlarged, the stress occurring thereat is decreased. In this case, the circular arc portion of the base of the tooth extends along the circumferential direction and projects to the radial outer side. Therefore, as mentioned above, if a corner portion of the spline groove of the clutch drum is sharp, the base of the tooth heavily interferes with the spline groove. Accordingly, wear of the spline groove caused by the tooth is increased. Moreover, the length of a straight portion at the side of the tooth is shortened, whereby an area in which the tooth and the spline groove are closely fitted is decreased. Therefore, a contact pressure occurring due to the tooth at the spline groove is increased, and wear of the spline groove caused by the tooth is increased. Accordingly, if the radius of curvature R of the base of the tooth is set to be larger than the value of point P on the curve (a), the durability of the coned disc spring is greatly reduced. As a result, the radius of curvature R cannot be set to be larger than the value of point P.

On the other hand, the coned disc spring "b" comprises a stress relaxation portion formed by notching the base of a tooth in approximately a circular arc shape in the radial direction. Therefore, if a corner portion of the spline groove of the clutch drum is sharp, even if the radius of curvature R of the base of the tooth is set to be larger than that of the conventional coned disc spring "a", the tooth does not interfere with the spline groove. Accordingly, when the coned disc spring "b" is compared to a conventional coned disc spring "a", it may be set to have a large radius of curvature R at the base of the tooth, such as the value of point Q, whereby stress occurring at the base of the tooth during the engaging of the clutch is reduced.

The coned disc spring "c" comprises a stress relaxation portion formed by notching the base of a tooth in approximately a circular arc shape along the circumferential direction. Therefor, even if the coned disc spring "c" is set to have a larger radius of curvature R at the base of the tooth than that of a conventional coned disc spring "a", the tooth does not interfere with the spline groove, as in the case of the coned disc spring "b" . Accordingly, when the coned disc spring "c" is compared to the conventional coned disc spring "a", it may be set to have a large radius of curvature R at the base of the tooth such as the value of point R. In this case, when the coned disc spring "c" has a similar degree of radius of curvature R at the base of the tooth with respect to the coned disc spring "b", stress occurring thereat is very small. Therefore, when the coned disc spring "c" is compared to the coned disc spring "b", stress occurring at the base of the tooth thereof is further reduced.

The coned disc spring "b" has a longer straight portion at the side of the tooth than that of the coned disc spring "c" . Therefore, the area in which the tooth and the spline groove are closely fitted is large, and the contact pressure thereat can be reduced. Thus, when the coned disc spring "b" is compared to the coned disc spring "c", wear of the spline groove caused by the tooth during rotation of the clutch drum is further reduced.

The coned disc spring "d" comprises a stress relaxation portion of which the shape is formed by combining the relaxation portions of the coned disc springs "b" and "c". Therefore, as shown by the curve "d" in Fig. 6, the coned disc spring "d" can yield approximately intermediate characteristics between those of the coned disc springs "b" and "c". Thus, when the coned disc spring "d" is compared to a conventional coned disc spring "a", it may have a large radius of curvature R, which is shown by the point S, whereby stress occurring at the base of the tooth during engaging of the clutch is reduced.

The coned disc springs "b", "c", and "d" may have various compositions so as to improve the characteristics thereof. For example, the stress relaxation portion of the above coned disc spring "b" may comprise a first circular arc portion and a second circular arc portion. The first circular arc portion has opposite first and second ends and is formed in a circular arc shape, and the first end is smoothly connected to the outer periphery of the body. The second circular arc portion has opposite first and second ends and is formed in a circular arc shape, and the first end is smoothly connected to the second end of the first circular arc portion, and the second end is smoothly connected to a side of the tooth. In this case, the first circular arc portion may have a larger radius of curvature than that of the second circular arc portion. According to this aspect, the second circular arc portion, which has a smaller radius of curvature R than that of the first arc portion, smoothly connects the first arc portion, which is connected to the outer periphery of the body, and a boundary between the stress relaxation portion and the side of the tooth. Therefore, the side of the tooth of the stress relaxation portion may have a longer straight portion than that of the tooth comprising a stress relaxation portion composed of one circular arc portion. Accordingly, wear of the spline groove caused by the tooth during rotation of the clutch drum is further reduced.

The above coned disc spring "c" may comprise a third circular arc portion, a straight portion, and a fourth circular arc portion. The third circular arc portion has opposite first and second ends and is formed in a circular arc shape, and the first end is smoothly connected to the outer periphery of the body. The straight portion has opposite first and second ends and extends to an approximately radial inner side of the body, and the first end is smoothly connected to the second end of the third circular arc portion. The fourth circular arc portion has opposite first and second ends and is formed in a circular arc shape, and the first end is smoothly connected to the second end of the straight portion, and the second end is smoothly connected to a side of the tooth. According to this aspect, when a coned disc spring is pressed in manufacturing, components of a die corresponding to the base of the tooth may have an improved durability.

The coned disc spring of the present invention comprises a stress relaxation portion at the base of the tooth. For example, when it is arranged between a driven plate (a second component) and a piston (a third component) at the inside of a clutch drum (a first component) of a clutch structure, the stress relaxation portion can reduce stress occurring at the base of the tooth during the engaging of the clutch. Moreover, even if a corner portion of the spline groove of the clutch drum is sharp, the tooth does not interfere with the spline groove during rotation of the clutch drum, whereby wear of the spline groove caused by the tooth may be reduced.

### BRIEF DESCRIPTION OF DRAWINGS

Figs. 1A to 1C are views showing a coned disc spring. Fig. 1A is a plan view, Fig. 1B is a sectional side view taken along line B-B of Fig. 1B, and Fig. 1C is a partially enlarged view of Fig. 1B.
Figs. 2A and 2B are views showing a composition of a clutch structure provided with a coned disc spring shown in Fig. 1A to 1C. Fig. 2A is an enlarged sectional side view and Fig. 2B is an exploded view.
Fig. 3 is a partially enlarged view showing a composition of a coned disc spring.
Fig. 4 is a partially enlarged view showing a composition of a coned disc spring.
Fig. 5 is a partially enlarged view showing a composition of a coned disc spring relating to an embodiment of the present invention.
Fig. 6 is a view explaining a relationship between the radius of curvature R at the base of a tooth and stress occurring thereat, which relates to various shapes of coned disc springs.
Fig. 7 is a sectional side view showing a composition of a multiplate clutch structure provided with a conventional coned disc spring.
Figs. 8A to 8C are views showing a composition of another conventional coned disc spring. Fig. 8A is a plan view, Fig. 8B is a sectional side view taken along line B-B of Fig. 8A, and Fig. 8C is a partially enlarged view of Fig. 8A.

### EXPLANATION OF REFERENCE NUMERALS

1 to 4 denote coned disc springs, 10 denotes a body, 11 denotes a tooth, 12, 22, 32, and 42 denote stress relaxation portions, 12A to 12C, 22A, 22B, 32A; 32C, 42A, and 42B denote circular arc portions, 32B denotes a straight portion, 101 denotes a clutch drum (a first component), 103 denotes a driven plate (a second component), 101A denotes a spline groove (a groove), and 105 denotes a piston (a third component).

### BEST MODE FOR CARRYING OUT THE INVENTION

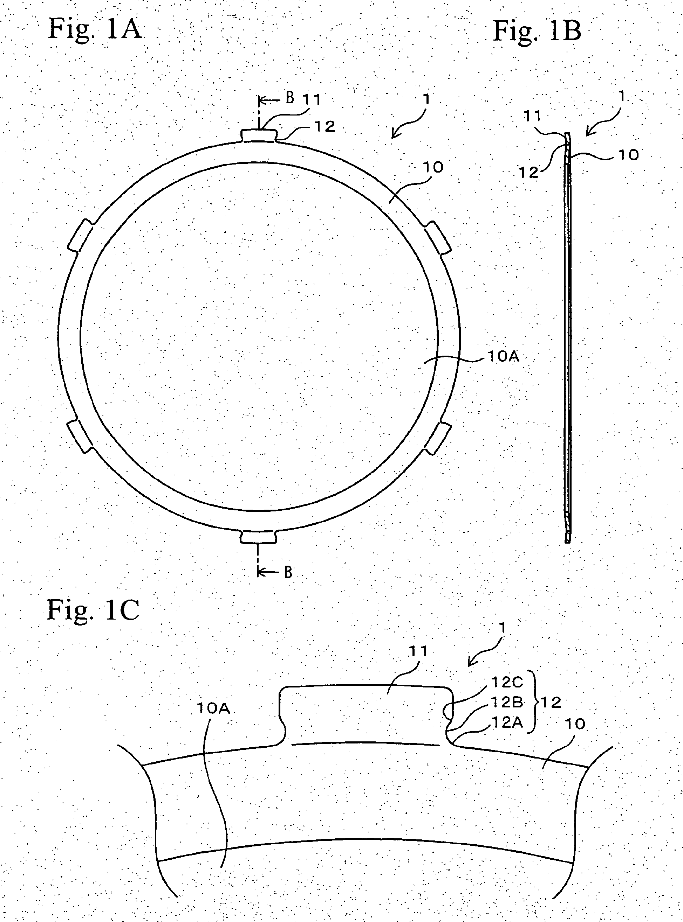

As explained with reference to the drawings, Figs. 1A to 1C are views showing a composition of a coned disc spring 1, and Fig. 1A is a plan view, Fig. 1B is a sectional side view taken along line B-B of Fig. 1B, and Fig. 1C is a partially enlarged view of Fig. 1A. The coned disc spring comprises a body 10 having a circular dish shape and has a hole 10A having a circular shape in the center of the body 10. The outer periphery of the body 10 is formed with plural teeth 11 (for example, six teeth) at equal intervals along the circumferential direction. The teeth 11 have an approximately rectangular shape and project to the radial outer side of the body 10. For example, when the teeth 11 are applied to the following clutch structure 100, they may prevent the coned disc spring 1 from relative rotating with respect to a clutch drum 101. It should be noted that the teeth used for the present invention are not limited to the teeth 11 shown in Fig. 1A to 1C, and various shapes of teeth may be used. For example, the teeth may have a shape which does not bend at the outer periphery of the body 10, and which extends along the outer periphery of the body 10. The number of the teeth is six, but this is not limited thereto, and any number of teeth can be selected.

The base of the teeth 11 is notched in approximately a circular arc shape along the circumferential direction to form a stress relaxation portion 12. For example, when the stress relaxation portion 12 is provided to the following clutch structure 100, it relaxes the stress concentrated at the base of the teeth 11 during the engaging of the clutch. The stress relaxation portion 12 comprises circular arc portions 12A to 12C that have a circular arc shape and are formed from the outer periphery of the body 10 toward the side of the teeth 11, in that order. The circular arc portion 12A (a first circular arc portion) has opposite first and second ends, and the first end is smoothly connected to the outer periphery of the body 10. The circular arc portion 12B (a second circular arc portion) has opposite first and second ends, and the first end is smoothly connected to the second end of the circular arc portion 12A. The circular arc portion 12C has opposite first and second ends, and the first end is smoothly connected to the second end of the circular arc portion 12B, and the second end is smoothly connected to the side of the teeth 11. In this case, the circular arc portion 12A has a radius of curvature R, which is, for example, twice as large as that of the circular arc portion 12B.

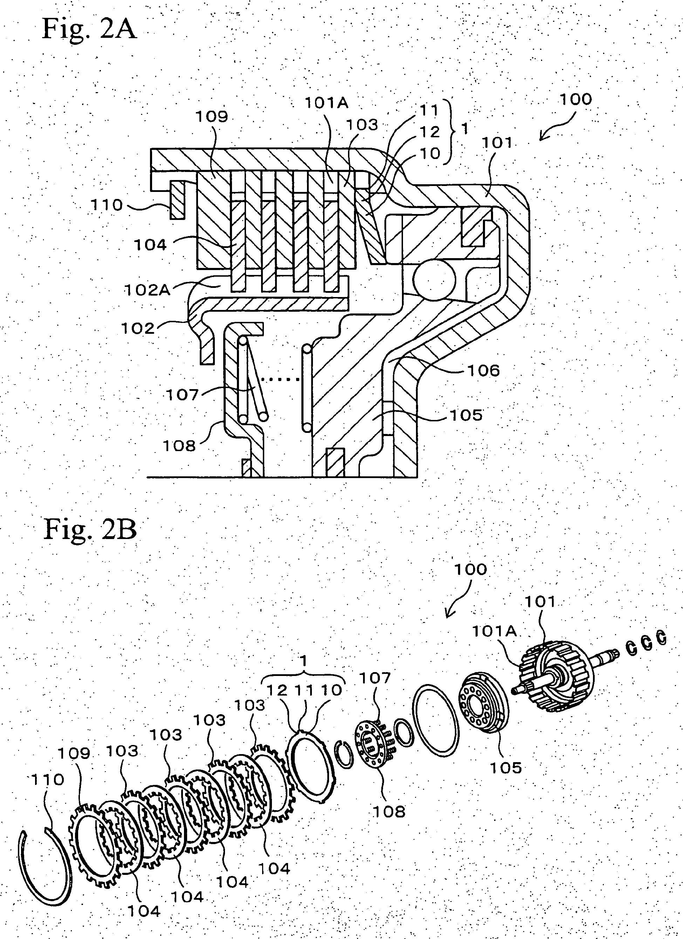

The above coned disc spring 1 may be applied to a clutch structure 100 shown in Figs. 2A and 2B. Figs. 2A and 2B show a composition of a clutch structure 100, and Fig. 2A is an enlarged sectional side view and Fig. 2B is an exploded view. A clutch hub 102 is omitted in Fig. 2B

The clutch structure 100, for example, is a wet-type multiplate clutch structure used for automatic cars. The clutch structure 100 comprises a cylindrical clutch drum 101 (a first component) having a bottom. Plural spline grooves 101A, extending in the axial direction, are formed along the circumferential direction on the inner peripheral surface of the clutch drum 101. A tubular clutch hub 102 is provided to the clutch drum 101 and has a common rotation axis with respect to the clutch drum 101. Plural spline grooves 102A, extending in the axial direction, are formed at equal intervals along the circumferential direction on the outer periphery of the clutch hub 102.

A driven plate 103 (a second component) and a driving plate 104 which have a circular disc shape and are each formed with a hole in the center, are alternately arranged at predetermined intervals between the clutch drum 101 and the clutch hub 102. The driven plate 103 is formed with plural teeth on the outer periphery thereof at equal intervals along the circumferential direction, and the teeth are closely fitted to the spline grooves 101A. Therefore, the driven plate 103 cannot relatively rotate with respect to the clutch drum 101, but it can move in the axial direction. The driving plate 104 is formed with plural teeth on the inner periphery thereof at equal intervals along the circumferential direction, and the teeth are closely fitted to the spline grooves 102A.
Therefore, the driving plate 104 cannot relatively rotate with respect to the clutch hub 102, but it can move in the axial direction.

A piston 105 (a third component), which is movable in the axial direction, is provided at the bottom side of the clutch drum 101. An oil pressure space 106, to which operating oil is supplied, is provided between the bottom of the clutch drum 101 and the piston 105. The piston 105 is driven by the operating oil supplied to the oil pressure space 106 in the axial direction. A return spring 107 is fixed by an end thereof on the surface of the piston 105 at the opening side of the clutch drum 101. The return spring 107 expands and contracts by pressure loaded thereon. The return spring 107 is fixed to a spring retainer 108 by another end thereof. The return spring 107 biases the piston 105 to the bottom of the clutch drum 101.

The above coned disc spring 1 is arranged between the driven plate 103, which is on the bottom side of the clutch drum 101, and the piston 105. In this case, in the coned disc spring 1, the teeth 11 are splined to the spline grooves 101A, the body 10 is supported by the driven plate 103 at the surface of the outer periphery thereof, and the body 10 is simultaneously supported by the piston 105 at the back of the inner periphery thereof. Therefore, the coned disc spring 1 cannot relatively rotate with respect to the clutch drum 101, but it can move in the axial direction

In the clutch drum 101, in order that the driven plate 103 and the driving plate 104 do not move beyond a predetermined position, a retaining plate 109 is arranged at the opening side thereof. The retaining plate 109 is formed with plural teeth on the outer periphery thereof at equal intervals along the circumferential direction, and the teeth are closely fitted to the spline groove 101A. Therefore, the retaining plate 109 cannot relatively rotate with respect to the clutch drum 101, but it can move in the axial direction. A snap ring 110 is arranged on the surface of the retaining plate 109 at the opening side of the clutch drum 101, so that the retaining plate 109 does not go off to the outside. The snap ring 110 is latched together with a ring groove, formed on an end of the opening side of the clutch drum 101.

The operation of the clutch structure 100 provided with the coned disc spring 1 will be explained with reference to Fig. 2A.

When an operating oil is supplied to the oil pressure space 106, the piston 105 is driven by the oil pressure, and it moves toward the opening side of the clutch drum 101 along the axis line with respect to the bias power of the return spring 107. The piston 105 presses the driven plate 103, which is on the bottom side of the clutch drum 101, through the coned disc spring 101. Then, the driven plate 103 and the driving plate 104, which are alternately arranged, and the retaining plate 109 move to the opening side of the clutch drum 101 along the axis line. Thus, when the retaining plate 109 is pushed by the snap ring 110, the friction surfaces of the driven plate 103 and the driving plate 104 which oppose each other, are engaged and are clutched. Therefore, torque can be transmitted from the clutch drum 101 to the clutch hub 102.

In this case, the coned disc spring 1 is elastically deformed from the dish shape to flattish shape, whereby it absorbs the shocks occurring during the engaging of the clutch. When the coned disc spring 1 is elastically deformed, stress occurring at the base of the teeth 11 is reduced by the stress relaxation portion 12. The stress relaxation portion 12 does not project to the radial outer side, whereby the tooth 11 does not interfere with the spline groove 101A during rotation of the clutch drum 101

When the supply of the operating oil to the oil pressure space 106 is stopped, the piston 105 is pushed back to the bottom side of the clutch drum 101 by the bias power of the return spring 107. Then, the friction surfaces of the driven plate 103 and the driving plate 104 are disengaged and are unclutched, and the coned disc spring 1 simultaneously returns to the former shape. The coned disc spring 1 comprises a stress relaxation portion 12 formed by notching the base of the tooth 11 in an approximately circular arc shape, whereby the base of the tooth 11 can have a large radius of curvature R without projecting to the radial outer side.
Therefore, when the above coned disc spring 1 is arranged between the driven plate 103 and the piston 105 in the clutch structure 100 of a transporting machine, the stress relaxation portion 12 can reduce the stress occurring at the base of the teeth 11 during the engaging of the clutch. Furthermore, even if a corner portion of the spline groove 101A of the clutch drum 101 is sharp, the tooth 11 does not interfere with the spline groove 101A during rotation of the clutch drum101, whereby wear of the spline groove 101A caused by the tooth 11 may be reduced. Accordingly, the coned disc spring 1 may be highly durable, thereby ensuring the accurate displays of the recently increasing mileage of automobiles.

Specifically, in the stress relaxation portion 12, a circular arc portion 12B, which has a smaller radius of curvature R than that of a circular arc portion 12A, smoothly connects the circular arc portion 12A, which is connected to the outer periphery of a body 10, and a boundary between the stress relaxation portion 12 and the side of the teeth. Therefore, the side of the teeth 11 of the stress relaxation portion may have a longer straight portion than that of the teeth comprising a stress relaxation portion composed of one circular arc portion. Accordingly, wear of the spline groove 101A caused by the teeth 11 during the engaging of the clutch drum101 is further reduced.

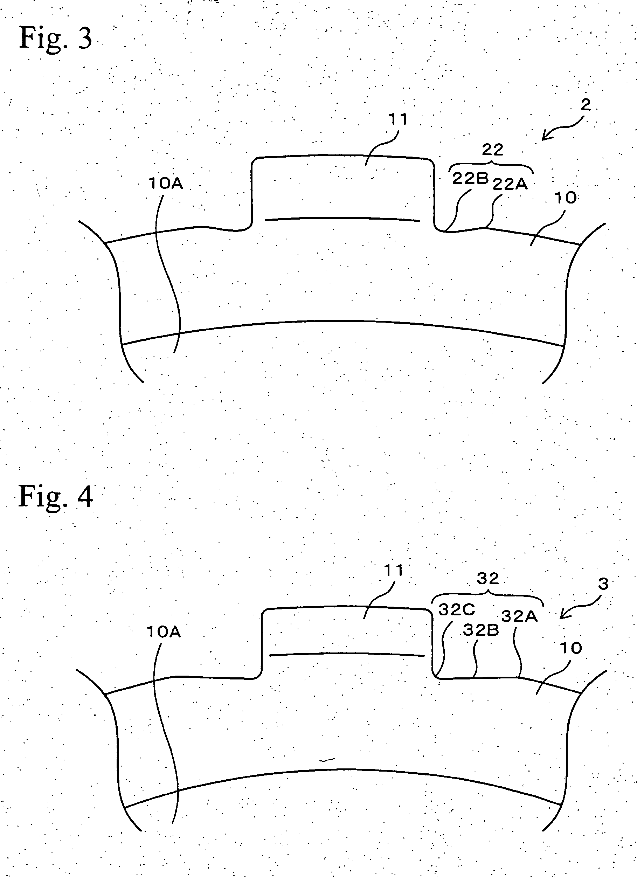

A second coned disc spring is explained with reference to Fig. 3. Fig. 3 is a partially enlarged view showing a composition of a coned disc spring 2 , in which a tooth 11 of the coned disc spring 2 is included. In the following inventive, component portions that are the same as those shown before have the same reference numerals, and explanations of the compositions and the functions thereof are omitted.

In a coned disc spring 2, a stress relaxation portion 12 is not formed by notching the base of the teeth 11 in circular arc shape along the circumferential direction,. The stress relaxation portion 22 is formed by notching the base of the teeth in approximately a circular arc shape in a radial direction, which is shown in Fig. 3. The stress relaxation portion 22 comprises circular arc portions 22A and 22B, which have opposite first and second ends and form a circular arc shape. The first end of the circular arc portion 22A is smoothly connected to the outer periphery of the body 10. The first end of the circular arc portion 22B is smoothly connected to the second end of the circular arc portion 22A, and the second end of the circular arc portion 22B is smoothly connected to the side of the tooth 11. The stress relaxation portion 22 is formed by notching the base of the teeth 11 in a radial direction, whereby the side of the teeth 11 can have a longer straight portion. Therefore, when the coned disc spring 2 is compared to the above previous one, the wear of the spline groove 101A caused by the teeth 11 may be further reduced.

Fig. 4 is a partially enlarged view showing a coned disc spring 3 , in which a tooth 11 of the coned disc spring 3 is included.

In a coned disc spring 3, a stress relaxation portion 22, comprising circular arc portions 22A and 22B, is not formed by notching in radial direction at the base of the tooth 11, . As shown in Fig. 4, a stress relaxation portion 32 comprises a circular arc portion 32A (a third circular arc portion), a straight portion 32B, and a circular arc portion 32C (a fourth circular arc portion). The circular arc portion 32A, the straight portion 32B, and the circular arc portion 32C are formed in a direction from the outer periphery of the body 10 to the side of the tooth 11, in that order. The circular arc portion 32A has opposite first and second ends and a circular arc shape, and the first end is smoothly connected to the outer periphery of the body 10. The straight portion 32B has opposite first and second ends and a linear shape in cross section, and it extends to approximately the radial inner side. The first end of the straight portion 32B is smoothly connected to the second end of the circular arc portion 32A. The circular arc portion 32C has opposite first and second ends, and the first end is smoothly connected to the second end of the straight portion 32B and the second end is smoothly connected to the side of the tooth 11. In the third embodiment, the straight portion 32B is formed between the circular arc portions 32A and 32C. When the coned disc spring 3 is pressed during manufacturing, components of a die corresponding to the base of the teeth may have a higher durability than that of components of a die for the coned disc spring 2.

An Fig. 5 is an enlarged view showing a composition of a coned disc spring 4 relating to the the present invention, in which a tooth 11 of the coned disc spring 4 is included.

In the coned disc spring 4, as shown in Fig. 5, a stress relaxation portion 42 having a circular arc portion 42A and 42B is formed at the base of the tooth 11. The circular arc portion 42A has a similar shape with respect to the stress relaxation portion 22 . The circular arc portion 42B is smoothly connected to the circular arc portion 42A, and it has a similar shape with respect to the stress relaxation portion 12. The coned disc spring 4 yields approximately intermediate characteristics between that of the coned disc spring 1 and that of the coned disc spring 2.

A coned disc spring of the present invention is used for a wet-type multiplate clutch for automatic cars, but this is not limited thereto. For example, the coned disc spring of the present invention may be used for a multiplate clutch structure of a construction machine and a transporting machine such as two-wheeled motor vehicles.

## Claims

1. coned disc spring comprising: a body (10) having a circular dish shape provided with plural teeth (11) and a stress relaxation portion (12) formed by notching on the body (10), wherein
the outer periphery oft he body (10) is formed with the plural teeth (11) suitable for closely fitting into grooves (101A) formed on a counter component (101) and projecting to a radial outer side on an outer periphery of the body (10) and in that
the stress relaxation portion (12) has:
a first circular arc portion (42B) formed by notching the base of the tooth (11) in an approximately circular arc shape in a circumferential direction of the body (10) and having opposite first and second ends,
**characterised in that** the stress relaxation portion also has:
a second circular arc portion (42A) formed by notching the base of the tooth (11) in an approximately circular arc shape in a radial direction of the body (10) and having opposite first and second ends, wherein the first end is smoothly connected to the outer periphery of the body (10); and wherein the first end of the first are portion is smoothly connected to the second end of the second circular arc portion (42A), and the second end is smoothly connected to a side of the tooth (11).

## Patentansprüche

1. Kegelförmige Scheibenfeder, umfassend:
einen Körper (10), der eine kreisförmige Tellerform aufweist, die mit mehreren Zähnen (11) und einem Beanspruchungsrelaxationsabschnitt (12), der durch Kerbung am Körper (10) ausgebildet ist, versehen ist, wobei
der Außenumfang des Körpers (10) mit den mehreren Zähnen (11) versehen ist, die geeignet sind, enganliegend in Nuten (101A) zu passen, die an einem Gegenstück (101) ausgebildet sind, und zu einer radial äußeren Seite an einem Außenumfang des Körpers (10) hervorstehen, und wobei
der Beanspruchungsrelaxationsabschnitt (12) aufweist:
einen ersten Kreisbogenabschnitt (42B), der durch Kerbung der Basis des Zahns (11) in einer näherungsweise kreisförmigen Bogenform in einer Umfangsrichtung des Körpers (10) ausgebildet ist und gegenüberliegende erste und zweite Enden aufweist,
**dadurch gekennzeichnet, dass** der Beanspruchungsrelaxationsabschnitt ferner aufweist:
einen zweiten Kreisbogenabschnitt (42A), der durch Kerbung der Basis des Zahns (11) in einer näherungsweise kreisförmigen Bogenform in einer Radialrichtung des Körpers (10) ausgebildet ist und gegenüberliegende erste und zweite Enden aufweist, wobei das erste Ende sanft in den Außenumfang des Körpers (10) übergeht; und
wobei das erste Ende des ersten Bogenabschnitts sanft in das zweite Ende des zweiten Kreisbogenabschnitts (42A) übergeht und das zweite Ende sanft in eine Seite des Zahns (11) übergeht.

## Revendications

1. Ressort conique à disques comprenant : un corps (10) ayant une forme d'assiette circulaire munie d'une pluralité de dents (11) et une partie de relaxation de contraintes (12) formée par entaillage sur le corps (10) dans lequel
la périphérie extérieure du corps (10) est formée avec la pluralité de dents (11) adaptées pour s'ajuster étroitement dans des rainures (101A) formées sur un composant complémentaire (101) et faisant saillie jusqu'à un côté extérieur radial sur une périphérie extérieure du corps (10) et en ce que
la partie de relaxation de contraintes (12) a : une première portion d'arc circulaire (42B) formée en entaillant la base de la dent (11) en une forme d'arc approximativement circulaire dans une direction circonférentielle du corps (10) et ayant de première et seconde extrémités opposées, **caractérisé en ce que** la partie de relaxation de contraintes a également : une seconde portion d'arc circulaire (42A) formée en entaillant la base de la dent (11) en une forme d'arc approximativement circulaire dans une direction radiale du corps (10) et ayant de première et seconde extrémités opposées, dans lequel la première extrémité est reliée de manière lisse à la périphérie extérieure du corps (10) et dans lequel la première extrémité de la première portion d'arc est reliée de manière lisse à la seconde extrémité de la seconde portion d'arc circulaire (42A), et la seconde extrémité est reliée de manière lisse à un côté de la dent (11).
